# EUROPEAN PATENT SPECIFICATION

(11) **EP 3 516 207 B1**
(45) Date of publication and mention of the grant of the patent: **23.06.2021**
(21) Application number: 17772302.0
(22) Date of filing: 19.09.2017
(51) Int. Cl.: F03D 1/00, F03D 1/02, F03D 13/20

(54) **FAIRING FOR A SUPPORT STRUCTURE OF A WIND TURBINE AND METHOD OF USING SAME**
VERKLEIDUNG FÜR EINE UNTERSTÜTZUNGSSTRUKTUR EINER WINDTURBINE UND METHODE, DENSELBEN ZU GEBRAUCHEN
CARÉNAGE POUR UNE STRUCTURE DE SUPPORT D'UNE ÉOLIENNE ET MÉTHODE D'UTILISER LE MÊME

(30) Priority: 21.09.2016 US 201662397482 P; 24.10.2016 DK PA201670831
(43) Date of publication of application: 31.07.2019
(73) Proprietor: Vestas Wind Systems A/S, 8200 Aarhus N (DK)
(72) Inventor: GUPTA, Anurag, Manvel, Texas 77578 (US)
(74) Representative: Vestas Patents Department
(86) International application number: PCT/DK2017/050298
(87) International publication number: WO 2018/054438

(56) References cited:
- EP-A1- 2 436 924
- EP-A2- 1 736 663
- DE-A1- 2 804 711
- DE-A1-102004 030 094
- US-A1- 2011 142 635
- US-A1- 2013 309 081
- US-A1- 2015 361 958

## Description

### Technical Field

The present invention relates generally to wind turbines, and more particularly to a wind turbine having a fairing coupled to the support structure of the wind turbine, and to a method of using the fairing to minimize a downstream wake region of the support structure of the wind turbine.

### Background

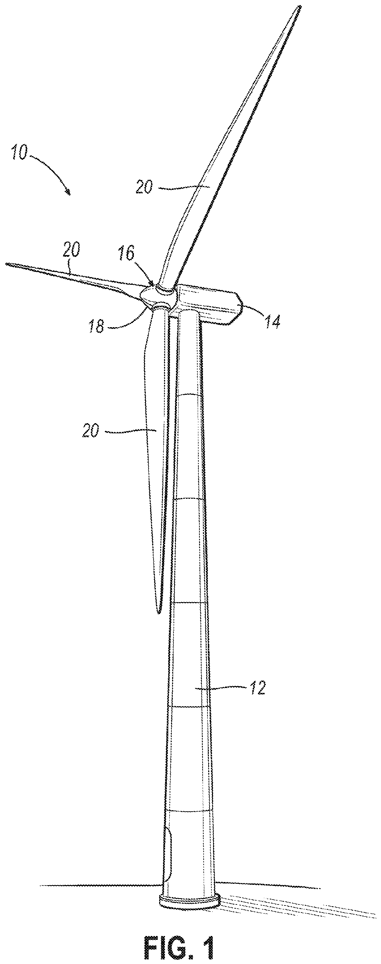

Wind turbines are used to produce electrical energy using a renewable resource and without combustion of a fossil fuel. Generally, a wind turbine converts kinetic wind energy into mechanical energy and then subsequently converts the mechanical energy into electrical energy. A common type of wind turbine is the single rotor upwind horizontal-axis wind turbine (HAWT). As illustrated in Fig. 1, an exemplary single rotor HAWT 10 includes a tower 12, a nacelle 14 located at the apex of the tower 12, and a single rotor 16 having a central hub 18 and one or more blades 20 (e.g., three blades) mounted the hub 18 and extending radially therefrom. The rotor 16 is supported by the nacelle 14 and positioned at the front of the nacelle 14 so that the rotor 16 faces into the wind upstream of its supporting tower 12. The rotor 16 may be coupled either directly or indirectly with a generator (not shown) housed inside the nacelle 14 and configured to convert the mechanical energy of the rotor 16 to electrical energy.

While wind turbines may be configured as stand-alone structures, such that there is no other wind turbine in the immediate vicinity of the wind turbine, often times wind turbines are grouped together, such as in a linear array that is generally perpendicular to a prevalent or expected wind direction. In this way, wind passing through a particular wind turbine does not significantly disrupt the airflow passing by its adjacent wind turbine. In addition, large groups of wind turbines may be arranged in a multi-dimensional array (e.g., a rectangular array). In such an array of wind turbines, which may comprise a wind farm, for example, the wind turbines may be clustered relatively close together such that adjacent wind turbines may have an upstream/downstream relationship to each other, and wherein the upstream wind turbine may impact the airflow that passes through the downstream wind turbine.

In this regard, it is generally well known that when air flows over a bluff body, a wake region is formed downstream of the bluff body. The velocity field in the wake region is changed compared to the free stream velocity and the turbulence intensity in the wake region is increased. Thus, when a wind turbine blade passes through the wake region, the blade will experience different loads as compared to loads experienced when the blade passes through the free stream airflow. Since the velocity field in the wake region is different, the angle of attack of the blade will change. However, the different loading on the blade can introduce aeromechanical issues, instabilities, noise and other undesirable effects. Thus, passing wind turbine blades through relatively moderate to strong wake regions is generally considered undesirable.

Accordingly, the spacing between an upstream wind turbine and a downstream wind turbine of a wind farm may be selected so as to minimize or reduce the impact of the upstream wind turbine on the downstream airflow that passes through the downstream wind turbine. While there may be several factors in determining the appropriate spacing, one may generally consider the effects of the upstream rotor and upstream support structure on the downstream wind turbine. In current wind farm designs, for example, upstream and downstream wind turbines may be separated by a distance on the order of several rotor diameters in order to allow the wake region generated by the upstream rotor and the upstream support structure to passively dissipate prior to the airflow impacting the downstream wind turbine.

Wind turbine manufacturers continually strive to increase power production from a wind turbine or wind farm. In this regard, the particular wind turbine design may play a significant role in the generated power output from the wind. For example, in addition to the increased power from higher wind velocities, energy obtained from the wind is proportional to the sweep area of the wind turbine blades. Thus for single-rotor HAWTs, the sweep area may be increased by using long wind turbine blades. In other words, the longer the blades, the larger the area that is traced by the blade tips, and thus more energy may be extracted from the wind. However, the continued increase in the length of the wind turbine blades may have certain practical limits and pose significant design challenges for wind turbine manufacturers.

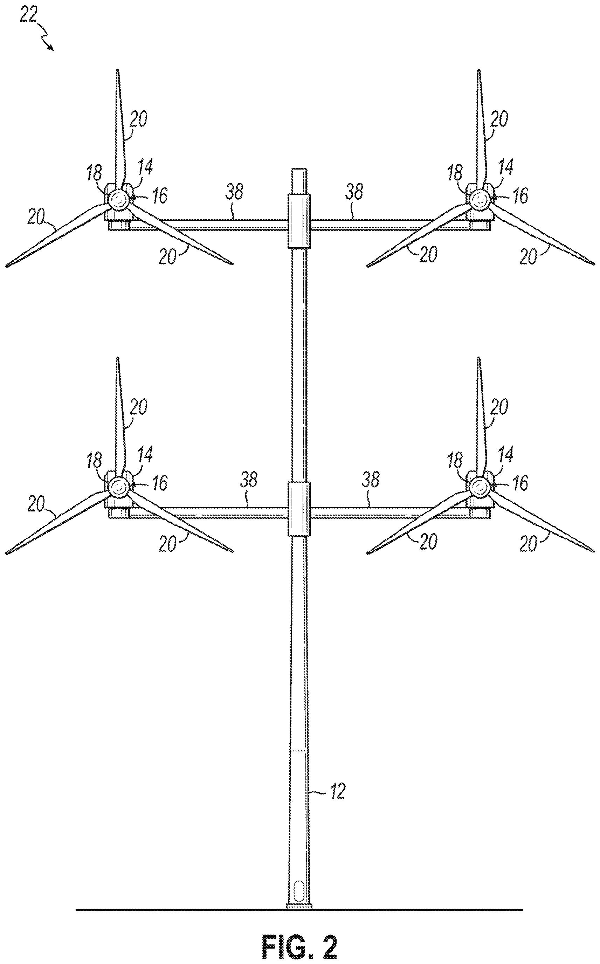

Accordingly, as an alternative to single-rotor HAWTs, wind turbine manufacturers have looked to multi-rotor wind turbines (such as multi-rotor HAWTs), which generally incorporate multiple rotors on a single support tower, as a potential route to increase energy capture and power production. In this regard, multiplying the number of rotors effectively increases the sweep area of the wind turbine. It should be appreciated that there are different types of multi-rotor wind turbines. For example, one type of multi-rotor wind turbine is a coplanar multi-rotor wind turbine. As illustrated in Fig. 2, in which like reference numbers refer to similar features shown in Fig. 1, in an exemplary coplanar wind turbine 22, multiple rotors 16 are arranged such that the individual wind turbine blades 20 on each rotor 16 generally lie within the same plane.

As such, there are generally negligible intra wind turbine effects, and the wake region caused by airflow over the coplanar wind turbine may be significant to wind turbine arrangements with upstream and downstream relationships, such as in a wind farm. In this regard, and similar to a multi-dimensional array of single-rotor HAWTs, an upstream coplanar wind turbine and a downstream wind turbine (coplanar or otherwise) may be spaced to allow the wake region generated by the upstream rotors and the upstream support structure to passively dissipate prior to the airflow impacting the downstream wind turbine.

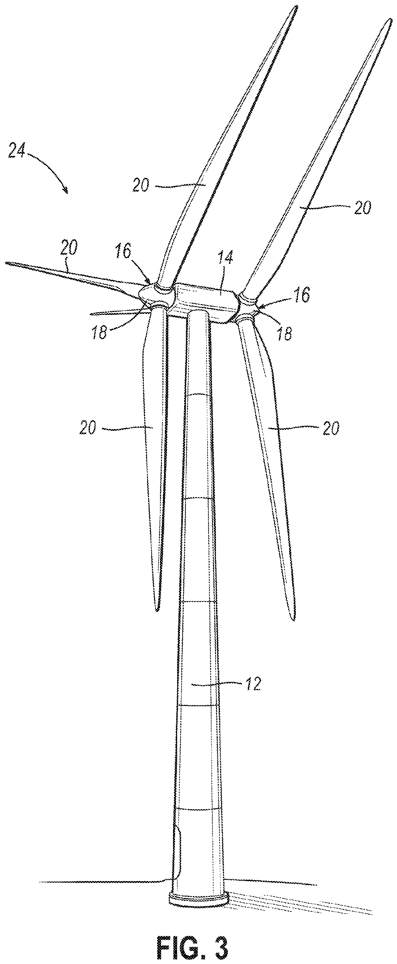

Another type of multi-rotor wind turbine is a non-planar or three dimensional multi-rotor wind turbine, wherein at least two of the rotors 16 lie within different planes. As illustrated in Fig. 3, for example, one type of three dimensional multi-rotor wind turbine includes a coaxial multi-rotor wind turbine 24, wherein the rotors 16 are arranged in series on an axis that extends generally parallel to the wind direction such that the wind drives a leading or upstream rotor and then operates a trailing or downstream rotor, both of which are supported by the same wind turbine tower 12. Similar to the above, a three dimensional wind turbine will also have a downstream effect when incorporated in a multi-dimensional wind farm, and the spacing may be selected to allow the wake region generated by the upstream rotors and the upstream support structure to passively dissipate prior to the airflow impacting the downstream wind turbine.

However, unlike the situations described above, for a three dimensional wind turbine, there may be an intra wind turbine upstream/downstream effect since the relevant length scale between upstream and downstream structures may be insufficient to allow passive dissipation of the wake region caused by the upstream structures. In other words, the downstream rotor of a three dimensional wind turbine may experience airflow from the wake region of the upstream rotor and the upstream support structure. This may result in the downstream rotor having a decreased efficiency in energy capture, increased loads, and being subject to increased capital costs as well as increased maintenance and repairs, which increase the overall costs of operating the wind turbine.

In view of the above, wind turbine manufacturers continually seek improvements that minimize or reduce the impact of the upstream rotor/support structure on the downstream airflow that passes through a downstream rotor, whether that be on a different wind turbine (e.g., such as in a wind farm) or the same wind turbine (such as with three dimensional wind turbines). More particularly, there is a need to minimize or reduce the wake region, or more precisely a need to mitigate the velocity deficits and turbulence increases in the wake region, caused by airflow over the upstream support structure. This may allow the spacing between adjacent wind turbines in a wind farm to be decreased, thus allowing more wind turbines to be located within a smaller space. Moreover, for three dimensional wind turbines, this may reduce the cost of the load-carrying structures, increase the energy capture efficiencies, and reduce maintenance and repair costs associated with the downstream rotor.

US2015/0361958 describes a noise, vibration and pressure pulsation reducing collar for a wind turbine. US3013/0309081 describes a fluid turbine having a shrouded rotor.

### Summary

According to the present invention there is provided a wind turbine configured as a multi-rotor wind turbine having a plurality of energy generating units in accordance with claim 1.

In one embodiment, the support structure of the wind turbine includes a tower and the aerodynamic portion of the support structure to which the fairing is coupled includes at least a portion of the tower. In another embodiment=, the aerodynamic portion of the support structure to which the fairing is coupled includes at least a portion of a support arm. In still a further embodiment, the support structure further includes a plurality of tension elements, each tension element being coupled to a support arm or the energy generating unit at a distance from the tower axis and extending toward the tower. In this embodiment, herein the aerodynamic portion of the support structure to which the fairing is coupled includes at least a portion of a tension element. In yet another embodiment, the multi-rotor wind turbine is configured to have at least one upstream energy generating unit and at least one downstream energy generating unit, wherein the fairing is positioned on the support structure generally between the upstream and downstream energy generating units.

In one embodiment, the fairing includes a first fairing portion positioned on a first side of the aerodynamic portion of the support structure, wherein the first fairing portion has a leading edge and a surface converging toward a central plane of the aerodynamic portion of the support structure which terminates at a first trailing edge adjacent the central plane, and wherein the first trailing edge has the corrugated profile. In another embodiment, the fairing further includes a second fairing portion positioned on a second side of the aerodynamic portion of the support structure opposite the first side, wherein the second fairing portion has a leading edge and a surface converging toward the central plane of the aerodynamic portion of the support structure which terminates at the first trailing edge of the first fairing portion. The fairing may be symmetrically positioned relative to the central plane.

In a further embodiment, the fairing may include a second fairing portion positioned on a second side of the aerodynamic portion of the support structure opposite the first side, wherein the second fairing portion has a leading edge and a surface converging toward the central plane of the aerodynamic portion of the support structure which terminates at a second trailing edge adjacent the central plane and spaced from the first trailing edge of the first fairing portion. The second trailing edge may have a corrugated profile and the fairing may be symmetrically positioned relative to the central plane. In one embodiment, the first and second trailing edges may be generally parallel with each other. In an alternative embodiment, the first and second trailing edges may define a criss-cross pattern.

The corrugated profile may take several different forms. For example, the crests and troughs of the corrugations may extend in a plane generally perpendicular to the wind direction. In an alternative embodiment, the crests and troughs of the corrugations may extend in a plane generally parallel to the wind direction. In one embodiment, the corrugated profile may include macro corrugations and/or micro corrugations. In one embodiment, the micro corrugations may be superimposed on the macro corrugations. In addition to the above, in embodiments of the invention, the corrugated profile at the trailing edge of the fairing may vary along the length of the fairing. In this regard, at least one of a wavelength, amplitude or type may vary along the length of the fairing.

In one embodiment, the fairing may be fixedly secured to the support structure, such as via bonding. In another embodiment, however, the fairing may include a support sleeve disposed about the support structure to which the fairing is coupled and configured to permit relative rotations between the fairing and the support structure. This may provide for a self-aligning feature that allows the fairing to adjust to changes in wind directions.

A method of minimizing a wake region of a wind turbine is disclosed. The wind turbine includes at least one energy generating unit and a support structure for carrying the at least one energy generating unit, wherein the wake region being minimized is that due to an airflow over an aerodynamic portion of the support structure. The method includes providing a fairing having a leading edge and a trailing edge, wherein the trailing edge has a corrugated profile; and coupling the fairing to the support structure such that the fairing is positioned along a downstream side of the aerodynamic portion of the support structure.

The fairings may be formed from a polymeric material through, for example, an injection molding process. Moreover, the fairings may be fixedly secured to the support structure or may be rotatably coupled to the support structure.

### Brief Description of the Drawings

Various additional features and advantages of the invention will become more apparent to those of ordinary skill in the art upon review of the following detailed description of one or more illustrative embodiments taken in conjunction with the accompanying drawings. The accompanying drawings, which are incorporated in and constitute a part of this specification, illustrate one or more embodiments of the invention and, together with the general description given above and the detailed description given below, serve to explain the one or more embodiments of the invention.
Fig. 1 is a perspective view of an exemplary single-rotor horizontal axis wind turbine;
Fig. 2 is a front plan view of an exemplary coplanar multi-rotor wind turbine;
Fig. 3 is a perspective view of an exemplary coaxial multi-rotor wind turbine;
Fig. 4 is a perspective view of a three dimensional multi-rotor wind turbine having upstream and downstream energy generating units;
Fig. 5 is a partial perspective view of a bluff body having a fairing;
Fig. 5A is a cross-sectional view through Fig. 5 generally along line 5A-5A;
Fig. 6 is a schematic view of a corrugated profile;
Fig. 6A is a schematic view of another corrugated profile;
Fig. 6B is a schematic view of another corrugated profile;
Fig. 6C is a schematic view of another corrugated profile;
Fig. 7 is a partial perspective view of a bluff body having a fairing;
Fig. 7A is a cross-sectional view through Fig. 7 generally along line 7A-7A;
Fig. 8 is a partial perspective view of a bluff body having a fairing;
Fig. 8A is a cross-sectional view through Fig. 8 generally along line 8A-8A; and
Fig. 9 is a partial perspective view of a bluff body having a fairing;
Fig. 9A is a cross-sectional view through Fig. 9 generally along line 9A-9A;
Fig. 10 is a partial perspective view of a bluff body having a fairing;
Fig. 11 is a partial perspective view of a bluff body having a fairing;
Fig. 12 is a schematic view of a corrugated profile; and
Fig. 13 is a schematic view of a corrugated profile.

### Detailed Description

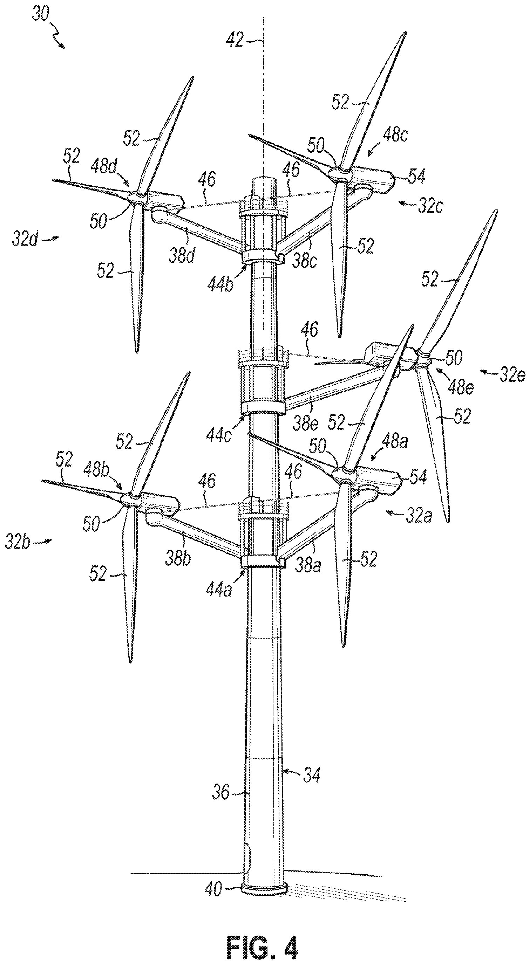

Referring to the figures, and to Fig. 4 in particular, a wind turbine 30 includes energy generating units 32 and a support structure 34 for supporting or carrying the energy generating units 32. In an exemplary embodiment, the wind turbine 30 may be configured as a three dimensional multi-rotor wind turbine having a plurality of energy generating units 32. It should be recognized, however, that aspects of the invention may be beneficial to a wide range of wind turbine designs and the invention is not limited to the three dimensional wind turbine illustrated and described herein. In this regard, the support structure 34 includes a tower 36 and support arms 38 mounted to the tower 36 for carrying energy generating units 32. As is conventional, the tower 36 is coupled to a foundation 40 at a lower end thereof and defines a generally vertical tower axis 42. The foundation 40 may be a relatively large mass, e.g., concrete, steel, etc. embedded in the ground and through which forces on the wind turbine 30 are ultimately transferred. The support arms 38 have a proximal end adjacent the tower 36 and extend generally outwardly from the tower 36 to a distal or tip end spaced from the tower. The support arms 38 may include various beams and/or lattice structure sufficient to accommodate the one or more energy generating units 32 at a distance from the tower 36 and tower axis 42.

By way of example, in one embodiment the support arms 38 may include generally cylindrical beams (e.g., tubular beams having a generally circular cross section) extending outwardly from the tower 36 for at least about 20 m, for at least about 40 m, or for at least about 70 m depending on the size of the wind turbine. Beams having different cross-sectional shapes are also possible. In one embodiment, the support arms 38 may be formed from steel, but it should be realized that other materials may also be possible. Moreover, the support arms 38 may extend from the tower 38 in a substantially perpendicular manner in one embodiment (Fig. 2). However, in alternative embodiments, the support arms 38 may extend from the tower at angles other than about 90 degrees. For example, as illustrated in Fig. 4, the support arms 38 may extend in a generally upward direction so as to form an obtuse angle relative to the tower 36. For example, the obtuse angle may be between about 100 and about 120 degrees. Other arrangements, such as the support arms 38 extending in a generally downward direction so as to form an acute angle relative to the tower 36, may also be possible. The support arms 38 may each extend from the tower 36 at substantially the same angle. Alternatively, the angle at which the support arms 38 extend from the tower 36 may be different for different support arms. This may depend, for example, on the particular design of the multi-rotor wind turbine.
In an exemplary embodiment, preferably each of the support arms 38 is rotatably mounted to the tower 36 via a yaw mechanism 44 that allows the support arms 38, and the energy generating units 32 attached thereto, to rotate about the tower axis 42 and thereby direct the energy generating units 32 into the wind. As is generally known in the art, the yaw mechanism 44 generally includes one or more yaw bearings and one or more yaw actuators (not shown) that provide rotation of the support arms 38 relative to the tower 36 about tower axis 42. In one embodiment, for example, two or more support arms 38 may be coupled to the same yaw mechanism 44, and the wind turbine 30 may include one or more yaw mechanisms 44 vertically distributed along the height of the tower 36. In an alternative embodiment, yaw mechanism 44 may be omitted at the tower 36 such that the support arms 38 are fixed relative to the tower 36 and a yaw mechanism (not shown) may be provided at the junction of the energy generating units 32 and the support arms 38 in order to direct the energy generating units 32 into the wind.

As illustrated in Fig. 4, for example, the multi-rotor wind turbine 30 includes a first, lower yaw mechanism 44a having a first support arm 38a and a second support arm 38b coupled thereto and extending from opposing sides of the tower 36. An energy generating unit 32a, 32b is respectively coupled to each of the support arms 38a, 38b adjacent a tip end of the support arms 38a, 38b. Wind turbine 30 may also include a second, upper yaw mechanism 44b having a first support arm 38c and a second support arm 38d coupled thereto and extending from opposing sides of the tower 36. Similarly, an energy generating unit 32c, 32d is respectively coupled to each of the support arms 38c, 38d adjacent a tip end of the support arms 38c, 38d. Lastly, wind turbine 30 includes an intermediate yaw mechanism 44c having a first support arm 38e coupled thereto and extending from the tower 36. An energy generating unit 32e is coupled to the support arm 38e adjacent a tip end of the support arm 38e.

Furthermore, due to the length of the support arms 38 away from the tower axis 42 as well as the weight of the energy generating units 32 carried on the support arms 38, the support structure 34 may further include one or more elongate tension elements 46 that provide further support to the energy generating units 32 carried on the support arms 38. In an exemplary embodiment, the one or more tension elements 46 extend between a first location on or adjacent the tower 36 and a second location on the support arm 38 adjacent the energy generating unit 32. Alternatively, the second location for the one or more tension elements 46 may be on the energy generating units 32 themselves. In various embodiments, for example, the tension elements 46 may include ropes, wire cables, rods, chains, or other elongate elements capable of withstanding large tension forces.

As illustrated in Fig. 4, each support arm 38 is configured to carry at least one energy generating unit at a distance from the tower 36. As used herein, an energy generating unit means the part of the wind turbine which actually transforms the energy of the wind into electrical energy. In accordance with this meaning, an energy generating unit typically includes a rotor 48 having a central hub 50 and one or more blades 52 (e.g., three blades) mounted to the hub 50 and extending radially therefrom, and a generator (not shown). In one embodiment, the energy generating unit may further include a drive train (not shown), including a gear arrangement, interconnecting the rotor 48 and the generator. The generator and a substantial portion of the drive train may be positioned inside of a nacelle 54 of the wind turbine 30. As noted above, in one embodiment, an energy generating unit 32 may be positioned adjacent a tip end of each of the support arms 38. It should be recognized, however, that an energy generating unit 32 may be positioned at other locations along the support arm 38, and that each support arm 38 may carry more than one energy generating unit 32.

In one embodiment, the wind turbine 30 may have a three dimensional configuration having one or more upstream rotors and one or more downstream rotors supported by the same tower 36. By way of example, in the embodiment shown in Fig. 4, wind turbine 30 includes four upstream energy generating units 32a, 32b, 32c, 32d (and their respective rotors 48a, 48b, 48c, 48d) in a coplanar configuration and one downstream generating unit 32e (and its respective rotor 48e). As will be appreciated, other arrangements of the upstream and downstream rotors are also possible. The support structure 34, including the tower 36 and support arms 38, are generally intermediate the upstream energy generating units 32a, 32b, 32c, 32d and the downstream energy generating units 32e. Accordingly, the primary or free stream airflow interacts with the upstream rotors 48a, 48b, 48c, 48d to cause a rotation under the forcing of the primary airflow. The rotation of the rotors 48a, 48b, 48c, 48d results in a downstream secondary airflow. A portion of the primary airflow and/or the secondary airflow then interacts with an aerodynamic portion of the support structure 34 that is downstream of the rotors 48a, 48b, 48c, 48d, but yet upstream of the downstream rotor 48e. As used herein, an aerodynamic portion is a portion of the support structure 34 subject to an airflow, such as from a primary airflow (e.g., free stream wind) and/or a secondary airflow from an upstream rotor, which may have an impact on a downstream structure, such as a downstream rotor or wind turbine. The interaction of the primary airflow and/or the secondary airflow with the aerodynamic portion of the support structure 34 results in a tertiary airflow that flows downstream of the support structure 34. At least a portion of the secondary airflow and the tertiary airflow interact with the downstream rotor 48e.

Many of the elements of the support structure 34 may be generally described as bluff bodies, such that when they are subject to an airflow, a wake region is generated downstream of the bluff body. As the wake region is generally associated with a velocity deficit (compared to flow without the wake region), increased turbulence, and deviations from a relatively smooth, uniform airflow profile, the airflow over the support structure 34 may have an impact on the downstream rotor 48e. Due to the relative closeness of the upstream rotors 48a, 48b, 48c, 48d and the downstream rotor 48e, the relative importance of the airflow over the support structure 34 and its resulting effect on the downstream rotor 48e may be relevant. Accordingly, measures may be taken to mitigate the effect of the support structure 34 on the downstream rotor 48e. More particularly, measures may be taken to reduce the wake region downstream of the support structure 34 that results from an airflow over the "bluff bodies" that constitute portions of the support structure 34. In this regard, a fairing may be coupled to the support structure 34, wherein the fairing is configured to reduce the wake region generated as a result of airflow over the support structure 34. Due to the presence of the fairing on the support structure 34, it is believed the impact of the support structure 34 on the downstream rotor 48e may be significantly reduced.

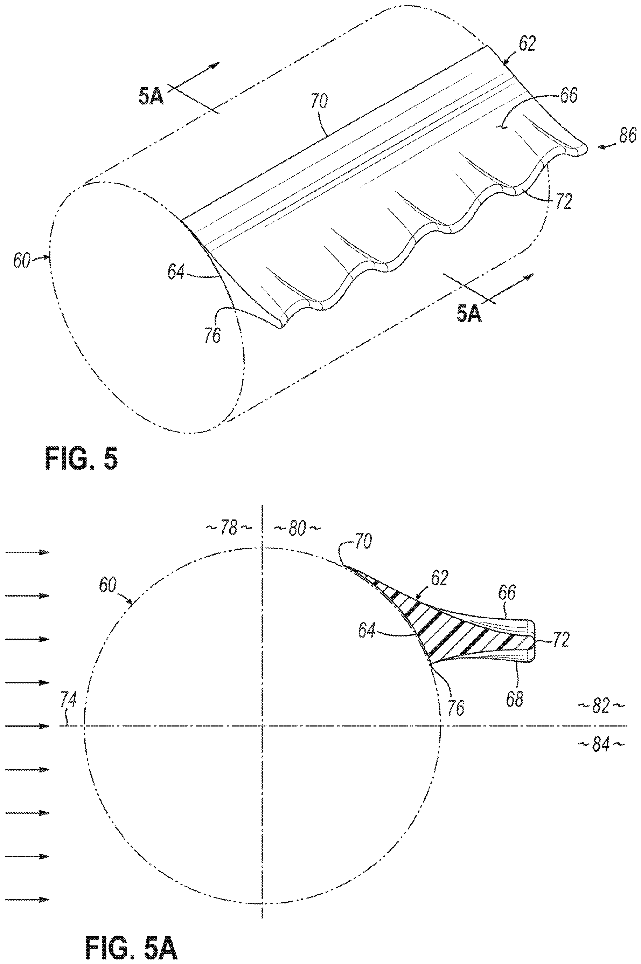

Figs. 5 and 5A schematically illustrate a bluff body 60 having a fairing 62 in accordance with an exemplary embodiment coupled thereto. The bluff body 60 may be representative of one of several elements of the aerodynamic portion of the support structure 34. By way of example, the bluff body 60 may represent at least a portion of the tower 36, at least a portion of a support arm 38, and/or at least a portion of a tension element 46. Aspects of the invention are not limited to these specific examples, and the bluff body 60 may represent other portions of the support structure 34 for which it may be desirable to reduce the resulting wake region.

The fairing 62 includes an elongate body having an interfacing surface 64, an upper surface 66, and a lower surface 68. The interfacing surface 64 is configured to couple with a portion of the bluff body 60. For example, the interfacing surface 64 may have a profile that matches the profile of the portion of the bluff body 60 at which the fairing 62 is coupled and be in contact or near contact with each other. Thus, the interfacing surface 64 may have a radius of curvature that is substantially the same as the radius of curvature of the bluff body 60 at which the fairing 62 is attached. Due to the intimate contact along the interfacing surface 64, the fairing 62 may be adhesively bonded to the bluff body 60 along this surface. However, other methods for coupling the fairing 62 to the bluff body 60 may also be used, including various magnet and mechanical fasteners generally known in the art.

The intersection of the interfacing surface 64 and the upper surface 66 defines a leading edge 70 of the fairing 62. The upper surface 66 extends from the leading edge 70 to a trailing edge 72 defined at the intersection of the upper surface 66 and the lower surface 68 and may be exposed to airflow over the bluff body 60. The upper surface 66 has a radius of curvature that is generally greater than the radius of curvature of the bluff body 60 at which the fairing 62 is coupled. By way of example, a substantial portion of the upper surface 66 may be generally planar (e.g., very large radius of curvature) and be angled toward or converging toward a central plane 74 of the bluff body 60. In an alternative embodiment, a substantial portion of the upper surface may be generally arcuate having a radius of curvature greater than the radius of curvature of the bluff body 60 at which the fairing 62 is coupled.

In a similar manner, the intersection of the interfacing surface 64 and the lower surface 68 defines another leading edge 76 of the fairing 62. The lower surface 68 extends from the leading edge 76 to the trailing edge 72 defined at the intersection of the upper surface 66 and the lower surface 68 and may be exposed to airflow over the bluff body 60. The lower surface 68 has a radius of curvature that is generally greater than the radius of curvature of the bluff body 60 at which the fairing 62 is coupled. By way of example, a substantial portion of the lower surface 68 may be generally planar (e.g., very large radius of curvature). In an alternative embodiment, a substantial portion of the lower surface 68 may be generally arcuate having a radius of curvature greater than the radius of curvature of the bluff body 60 at which the fairing 62 is coupled.

The bluff body 60 generally includes an upstream side 78 and a downstream side 80 determined, for example, by a plane through the maximum thickness of the bluff body 60. For a symmetric bluff body 60, such as a cylindrical body, this plane may be the mid-plane of the body (e.g., generally perpendicular to the direction of the airflow). The bluff body 60 also generally includes a first, upper side 82 and a second, lower side 84 determined, for example, by the central plane 74, which may extend through the leading and trailing points of the bluff body 60 relative to the airflow. In the embodiment shown in Figs. 5 and 5A, the fairing 62 may be generally positioned on the downstream side 80 and the upper side 82 of the bluff body 60. More particularly, the leading edge 70 may be immediately adjacent the surface of the bluff body 60 adjacent the point of maximum thickness of the upper side of the bluff body 60. Additionally, the trailing edge 72 of the fairing 62 may be positioned downstream of the bluff body 60. For example, the trailing edge 72 may be positioned between about 0.1D and about 2D downstream of the bluff body 60, wherein D is the effective bluff body length scale to which the fairing is coupled. In one embodiment, the trailing edge 72 may also be positioned generally along the central plane 74. In alternative embodiments, however, the trailing edge 72 may be spaced from the central plane 74, such as in the upper side 82 of the bluff body 60.

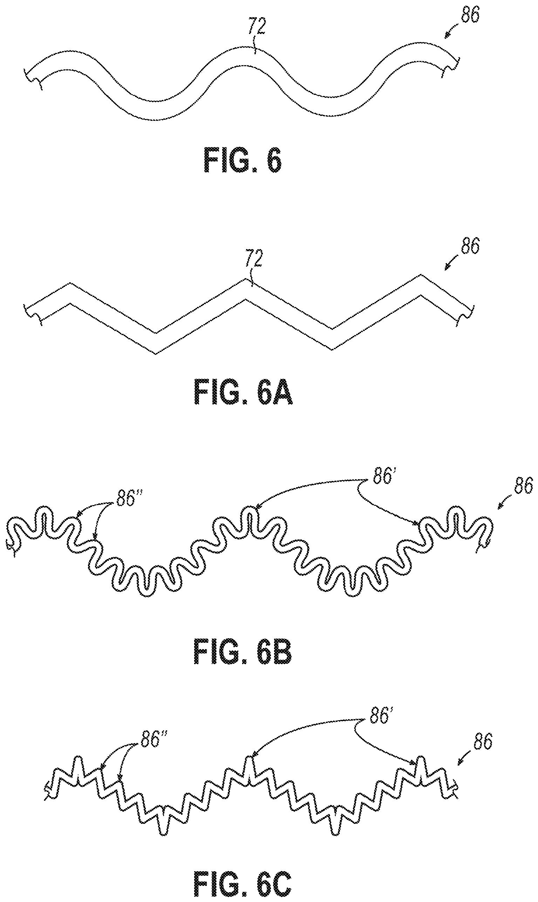

The trailing edge 72 of the fairing 62 may include a corrugated profile 86 along at least a portion of the length of the trailing edge 72. The corrugated profile 86 generally provides a series of crests and troughs (alternatively described as peaks and valleys) along the length of the trailing edge 72. As schematically illustrated in Fig. 6, an end view of the trailing edge 72 may have a corrugated profile 86 that is relatively smooth and wavy (e.g., such as shown in Fig. 5). Alternatively, as schematically illustrated in Fig. 6A, the trailing edge 72 may have a corrugated profile 86 that is more sharp or jagged. In the embodiment shown in Figs. 6 and 6A, the crests and troughs extend in a plane generally perpendicular to the wind direction (illustrated by the arrows in Fig. 5A). In a further alternative embodiment, the corrugated profile 86 may include further corrugations on a smaller, finer scale. In this regard, as schematically illustrated in Figs. 6B and 6C, the corrugated profile 86 may include a macro corrugated profile 86' and a micro corrugated profile 86" superimposed on the macro corrugated profile 86'. The micro corrugations may be the same or different than the macro corrugations in type. Additionally, and by way of example, the wavelength and amplitude of the micro corrugations may be between about one-fourth and one-tenth of the corresponding values on the macro corrugations. Other corrugated profiles 86 for the macro and micro corrugations may also be used and may be generally characterized by a series of crests and troughs along a length of the trailing edge 72.

It is believed that such a corrugated profile 86 along the trailing edge 72 essentially mixes out the wake region downstream of the bluff body 60. In this way, the disruptions in the airflow as a result of the support structure 34 are minimized or reduced downstream of the support structure 34, thus providing a more uniform airflow for interacting with, for example, a downstream rotor such as rotor 48e. More particularly, it is believed that the corrugated profile 86 along the trailing edge 72 creates additional vortices in the wake region that then act like fluid dynamic "stirrers" to enhance mixing in the wake region and entrain more energy from the surrounding fluid. As a result, the wake region is diffused (i.e., having its velocity deficit reduced) in a relatively shorter distance downstream of the support structure 34. While a wide range of corrugated profiles 86 are possible, in various embodiments, the wavelength of the corrugated profile 86 may be between about 0.1D and about 0.5D, again where D is the effective bluff body length scale to which the fairing 62 is coupled. More generally, the wavelength of the corrugations may correlate to the bluff body size and critical wind velocities that dictate the size of the wake velocity deficit that needs to be mitigated. In addition, the amplitude of the corrugated profile 86 may be between about 3 and about 30 times the size of the boundary layer thickness of the flow ahead of the leading edge 70. In an exemplary embodiment, the amplitude may be between about 0.05 and about 0.1D. More generally, the amplitude of the corrugations may also correlate to the bluff body size and critical wind velocities that dictate the size of the wake velocity deficit that needs to be mitigated.

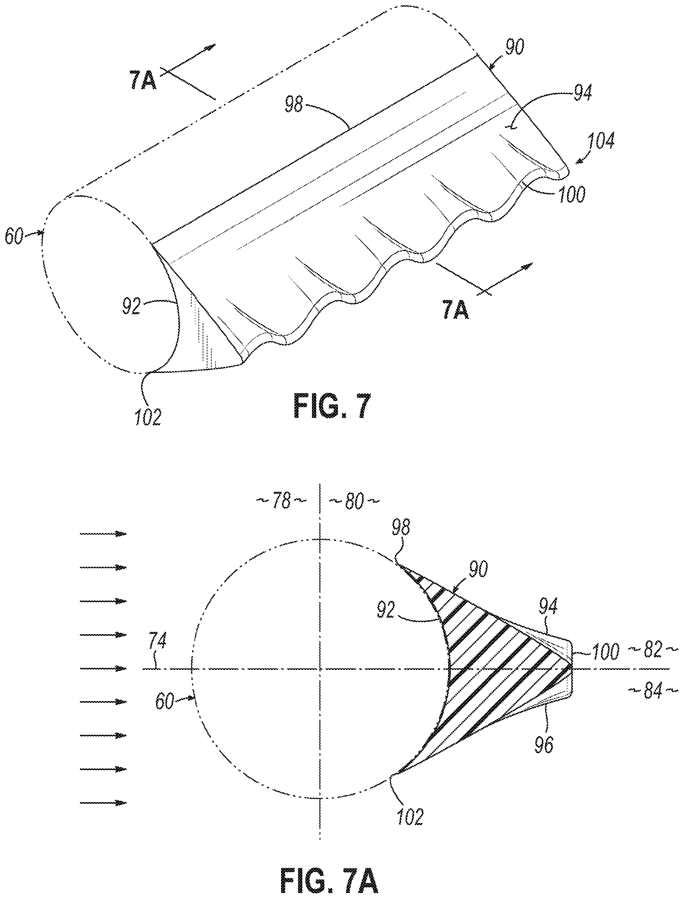

Figs. 7 and 7A illustrate a fairing 90 in accordance with another embodiment. In contrast to the embodiment illustrated in Figs. 5 and 5A, the fairing 90 of Figs. 7 and 7A is substantially symmetric relative to the central plane 74 and includes portions on both the upper side 82 and the lower side 84. Fairing 90 is somewhat similar to fairing 62 and includes an elongate body having an interfacing surface 92, an upper surface 94, and a lower surface 96. The interfacing surface 92 is configured to couple with a portion of the bluff body 60. For example, the interfacing surface 92 may have a profile that matches the profile of the portion of the bluff body 60 at which the fairing 90 is coupled and be in contact or near contact with each other. Thus, the interfacing surface 92 may have a radius of curvature that is substantially the same as the radius of curvature of the bluff body 60 at which the fairing 90 is attached. Due to the intimate contact along the interfacing surface 92, the fairing 90 may be adhesively, mechanically or magnetically coupled to the bluff body 60 along this surface.

The intersection of the interfacing surface 92 and the upper surface 94 defines a leading edge 98 of the fairing 90. The upper surface 94 extends from the leading edge 98 to a trailing edge 100 defined at the intersection of the upper surface 94 and the lower surface 96 and may be exposed to airflow over the bluff body 60. The upper surface 94 has a radius of curvature that is generally greater than the radius of curvature of the bluff body 60 at which the fairing 90 is coupled. By way of example, a substantial portion of the upper surface 94 may be generally planar (e.g., very large radius of curvature) and be angled toward or converging toward the central plane 74 of the bluff body 60. In an alternative embodiment, a substantial portion of the upper surface 94 may be generally arcuate having a radius of curvature generally greater than the radius of curvature of the bluff body 60 at which the fairing 90 is coupled.

In a similar manner, the intersection of the interfacing surface 92 and the lower surface 96 defines another leading edge 102 of the fairing 90. The lower surface 96 extends from the leading edge 102 to the trailing edge 100 defined at the intersection of the upper surface 94 and the lower surface 96 and may be exposed to airflow over the bluff body 60. The lower surface 96 has a radius of curvature that is generally greater than the radius of curvature of the bluff body 60 at which the fairing 90 is coupled. By way of example, a substantial portion of the lower surface 96 may be generally planar (e.g., very large radius of curvature) and be angled toward or converging toward the central plane 74 of the bluff body 60. In an alternative embodiment, a substantial portion of the lower surface 96 may be generally arcuate having a radius of curvature generally greater than the radius of curvature of the bluff body 60 at which the fairing 90 is coupled.

The trailing edge 100 of the fairing 90 may include a corrugated profile 104 along at least a portion of the length of the trailing edge 100. The corrugated profile 104 may be similar to the corrugated profiles 86 shown and described above. Similar to the above, it is believed that such a corrugated profile 104 along the trailing edge 100 essentially mixes out the wake region downstream of the bluff body 60 (i.e., significantly reduces the velocity deficits and turbulence in the wake region). In this way, the disruptions in the airflow as a result of the support structure 34 are minimized or reduced downstream of the support structure 34, thus providing a more uniform airflow for interacting with, for example, a downstream rotor.

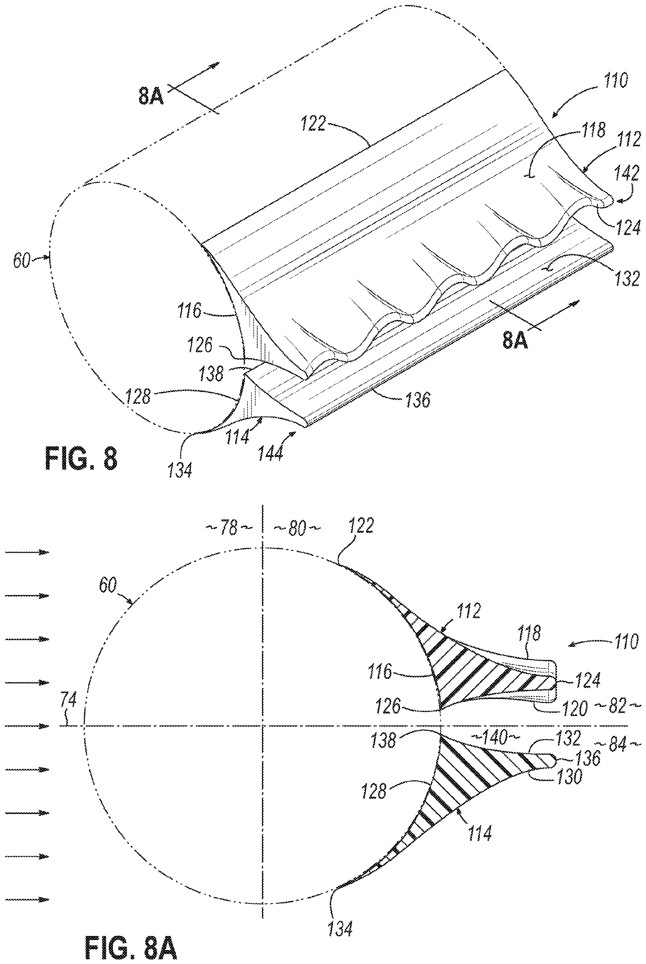

Figs. 8 and 8A illustrate a further embodiment. These figures illustrate a fairing 110 having a two-piece construction and including a first fairing portion 112 and a second fairing portion 114 coupled to the bluff body 60 on the downstream side 80 adjacent to one another. The first fairing portion 112 includes an elongate body having an interfacing surface 116, an upper surface 118, and a lower interior surface 120. Similar to the above, the interfacing surface 116 is configured to couple with a portion of the bluff body 60. The intersection of the interfacing surface 116 and the upper surface 118 defines a leading edge 122 of the fairing 110. The upper surface 118 extends from the leading edge 122 to a trailing edge 124 defined at the intersection of the upper surface 118 and the lower interior surface 120. The upper surface 118 may be similar to that described above. The intersection of the interfacing surface 116 and the lower interior surface 120 defines an interior edge 126 of the fairing 110. The lower interior surface 120 extends from the interior edge 126 to the trailing edge 124 defined at the intersection of the upper surface 118 and the lower interior surface 120.

In a similar manner, the second fairing portion 114 includes an elongate body having an interfacing surface 128, a lower surface 130, and an upper interior surface 132. Similar to the above, the interfacing surface 128 is configured to couple with a portion of the bluff body 60. The intersection of the interfacing surface 128 and the lower surface 130 defines a leading edge 134 of the fairing 110. The lower surface 130 extends from the leading edge 134 to a trailing edge 136 defined at the intersection of the lower surface 130 and the upper interior surface 132. The lower surface 130 may be similar to that described above. The intersection of the interfacing surface 128 and the upper interior surface 132 defines an interior edge 138 of the fairing 110. The upper interior surface 132 extends from the interior edge 138 to the trailing edge 136 defined at the intersection of the lower surface 130 and the upper interior surface 132.

In one embodiment, the first fairing portion 112 may be positioned on the bluff body 60 so as to be in the upper side 82 and the second fairing portion 114 may be positioned on the bluff body 60 so as to be in the lower side 84. Moreover, the first and second fairing portions 112, 114 may be positioned so as to be substantially symmetric about the central plane 74. In alternative embodiments, it should be realized that the arrangement of the fairing portions 112, 114 on the bluff body 60 may not be symmetric and may not be on both the upper and lower sides 82, 84. Thus, different arrangements of the fairing portions 112, 114 are possible. The fairing portions 112, 114 may be positioned to define a space or gap 140 defined at least in part by the interior sides 120, 132 of the fairing portions 112, 114, respectively. As illustrated, the fairing 110 may be characterized by two trailing edges which are adjacent to, but spaced from one another.

At least one of the trailing edges 124, 136 has a corrugated profile 142 along at least a portion of the length of the at least one trailing edge 124, 136. For example, as illustrated in Fig. 8, the trailing edge 124 of the first fairing portion 112 has a corrugated profile 142 while the trailing edge 136 of the second fairing portion 114 has a substantially straight or linear profile 144. The corrugated profile 142 may be similar to the corrugated profiles shown and described above. In an alternative embodiment, the trailing edge 136 of the second fairing portion 114 may have a corrugated profile while the trailing edge 124 of the first fairing portion 112 has a linear profile. In still a further alternative embodiment, both trailing edges 124, 136 may have a corrugated profile. In such an embodiment, the corrugated profile on the trailing edges 124, 136 may substantially be the same. Alternatively, the corrugated profile on the trailing edges 124, 136 may be different. Furthermore, one or both of the trailing edges 124, 136 may include macro and/or micro corrugations. In any event, similar to the above, it is believed that such a corrugated profile along at least one of the trailing edges 124, 136 essentially mixes out the wake region downstream of the bluff body 60 (i.e., significantly reduces the velocity deficits and turbulence in the wake region). In this way, the disruptions in the airflow as a result of the support structure 34 may be minimized or reduced downstream of the support structure 34, thus providing a more uniform airflow for interacting with, for example, a downstream rotor.

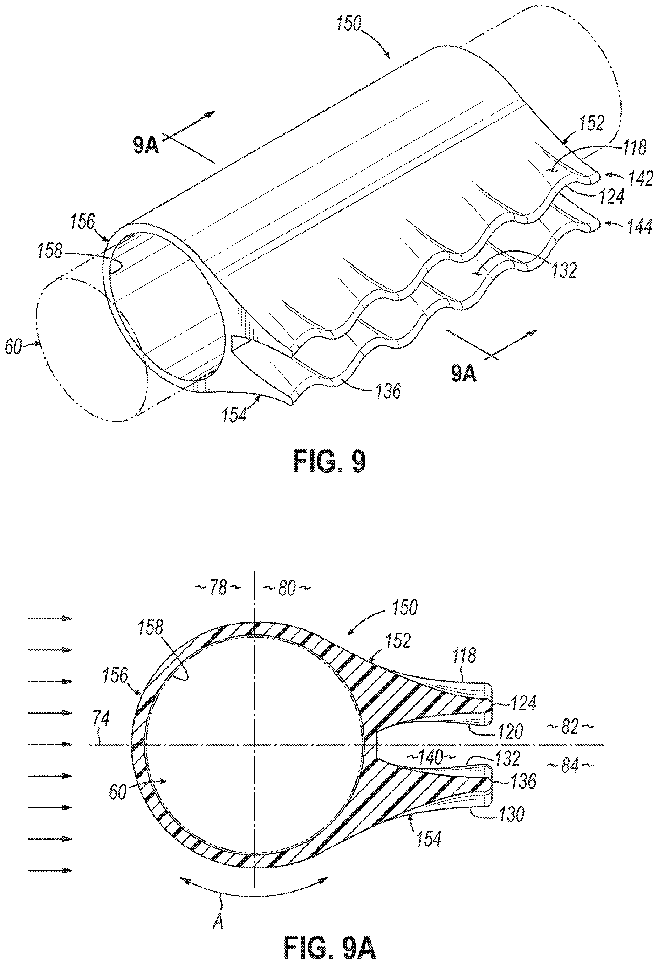

Figs. 9 and 9A illustrate another embodiment of a fairing 150. The embodiment shown in these figures is similar to that shown in Figs. 8 and 8A, but incorporates a self-aligning feature that allows the fairing 150 to move relative to the bluff body 60 so as to, for example, adjust to a changing wind direction. More particularly, the fairing 150 may be configured to rotate about the bluff body 60. In this regard, a first fairing portion 152 and a second fairing portion 154 may be carried by an elongate support sleeve 156 disposed about the bluff body 60. The first and second fairings 152 and 154 may be substantially similar to fairing portions 112, 114 described above, and thus will not be described in further detail here. In an alternative embodiment (not shown), the first and second fairing portions 152, 154 may be carried by one or more discrete rings disposed about the bluff body 60.

In reference to Figs. 9 and 9A, the support sleeve 156 includes an opening 158 configured to receive the bluff body 60 therethrough. Accordingly, the cross-sectional profile of the opening 158 may closely match the cross-sectional profile of the bluff body 60. In an exemplary embodiment, the two cross sections may be substantially circular. The circular cross-sectional profile allows the fairing 150 to be supported by the bluff body 60, but yet allow the fairing 150 to rotate about the bluff body 60 as illustrate by arrow A. Depending on the bluff body 60 to which the fairing 150 is being coupled, the support sleeve 156 may be an integral piece such that the bluff body has to be inserted through the opening 158 (e.g., such as for the tension elements 46 as the bluff body 60), or a two-part element which may be coupled to the bluff body 60 as an add-on feature (e.g., such as for the tower 36 as the bluff body 60). Still further, the support sleeve 156 may have a split or opening that allows the support sleeve 156 to flex and snap over the bluff body 60 (e.g., again such as for the tension elements 46).

In an exemplary embodiment, the support sleeve 156 is able to rotate freely about the bluff body 60 relatively unrestricted (e.g., without excessive friction) so that the fairing 150 may be self-aligning with the direction of the airflow interacting with the support structure 34. Thus, should the direction of the airflow change, the fairing will rotate relative to the bluff body 60 so as to realign with the airflow direction. This process may be an uncontrolled process such that it occurs without user input. In an alternative embodiment, the fairing 150 may be associated with a yaw mechanism of the wind turbine. For example, should the fairing 150 be positioned about the tower 36, then the fairing 150 may be operatively coupled to one of the yaw mechanisms 44 such that the positioning of the fairing 150 relative to the wind may be controlled through control of the yaw mechanism 44. This may be achieve, for example, by an on-board wind turbine controller configured to control the yaw of the support arms 38.

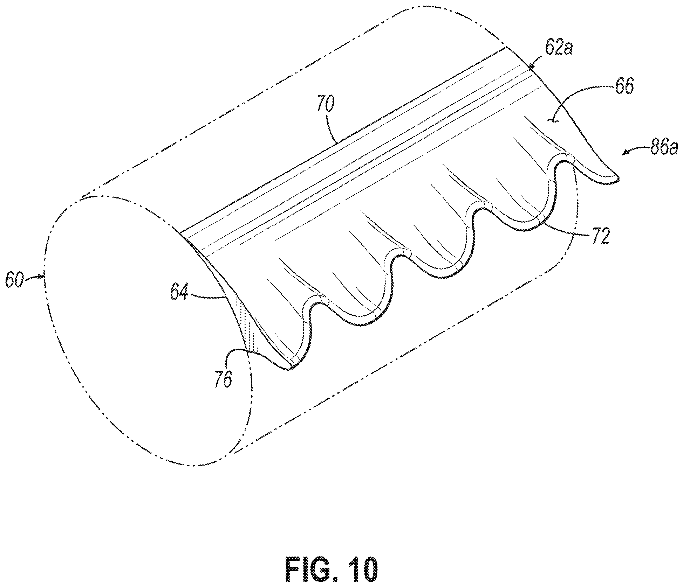

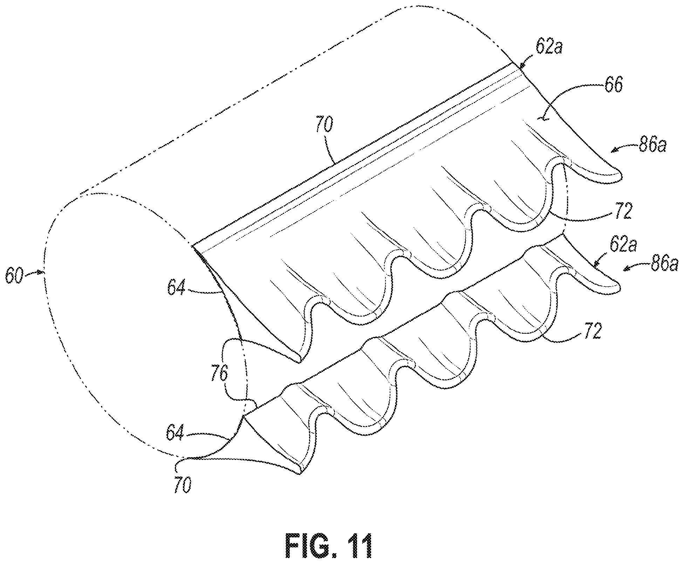

In the embodiments described above, the crests and troughs of the corrugated profile extend in a plane generally perpendicular to the wind direction. However, aspects of the invention are not limited to such a corrugated profile. To this end, Figs. 10 and 11 illustrate bluff bodies 60 having fairings 62a, 90a in accordance with another exemplary embodiment, in which like reference numbers refer to like features in Figs. 5 and 7, respectively. The primary difference between the embodiment shown in Figs. 10 and 11 and those shown in Figs. 5 and 7 is the direction of the corrugations. More particularly, in the embodiments shown in Figs. 10 and 11, the crests and troughs may extend in a bidirectional manner, e.g., in a direction generally parallel to the wind direction and in a direction generally perpendicular to the wind direction. Thus, instead of the corrugated profiles 86, 104 going only substantially up and down in a generally vertical direction (e.g., relative to the reference frame shown in the figures), the corrugated profile 86a may go both up and down in a generally vertical direction and in and out in a generally horizontal direction (again relative to the reference frame shown in the figures). This type of corrugated profile also creates vortices that mix out the wake region downstream of the bluff body 60 and thus would provide the benefits described above.

While not shown in the figures, it should be recognized that the corrugated profile on the fairings 90, 152 shown in Figs. 7 and 9 may be similar to that shown in Figs. 10 and 11 (i.e., the crests and troughs extending in a bidirectional manner). Thus, various additional embodiments are possible. Furthermore, various combinations of macro corrugations and micro corrugations are also possible. For example, the macro corrugations may be as shown in Fig. 5 (i.e., up and down crests/troughs) and the micro corrugations may be as shown in Fig. 10 (i.e., both up and down and in and out crests/troughs) but on a micro scale, or vice versa. Thus, it should be recognized that features that have been shown and described herein may be combined in different combinations and remain within the scope of the present invention.

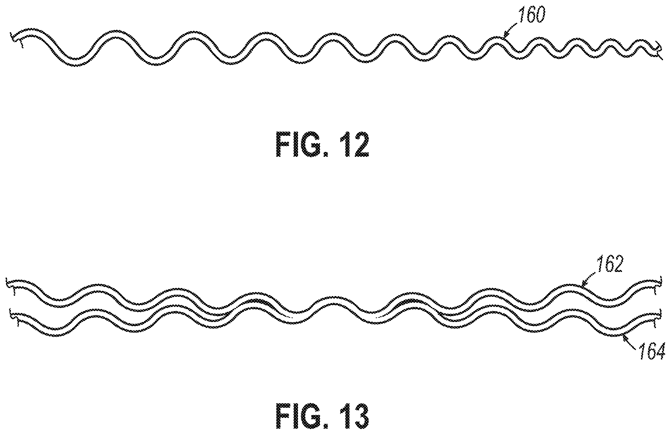

In still a further embodiment, the corrugated profile does not have to remain constant along the length of the fairing. Such an embodiment is schematically illustrated in Fig. 12, for example. As illustrated in this figure, both the wavelength and the amplitude of the corrugated profile 160 may vary along the length of the fairing. More particularly, both the wavelength and amplitude may decrease in a first direction along the length of the fairing (i.e., the same direction). By way of example and without limitation, the portion of the support structure 34 that is upstream of the outer 50%, and more preferably the outer 30%, of the rotor blades of a downstream rotor may include a fairing having a corrugated profile with smaller wavelengths and/or amplitudes compared to the corrugated profile of the fairing that corresponds to the inner 50%, and more preferably the inner 70%, of the rotor blades of a downstream rotor. In any event, both wavelength and the amplitude may remain in the ranges provided above.

While in the embodiment illustrated in Fig. 12 both the wavelength and amplitude vary along the length of the corrugated profile, in alternative embodiments only one or the other may vary along the length. In addition to the above, the type of corrugation may also vary along the length of the fairing. By way of example, along a first portion of the length, the corrugated profile may be smooth and wavy (Fig. 6), while along a second portion of the length, the corrugated profile may be sharp or jagged (Fig. 6A). Moreover, should the corrugated profile include micro corrugations, it should be recognized that these may also vary along the length of the fairing in wavelength, amplitude and type.

In the embodiments having two fairing portions, such as those illustrated in Fig. 8 and Fig. 9, for example, further alternative embodiments are possible. In this regard, in those embodiments the corrugated profiles 142, 144 extend along the length of the bluff body 60 in a generally parallel manner, wherein the average distance between the trailing edges 124, 136 remains generally constant along the length of the bluff body. In still further alternative embodiments, the corrugated profiles may extend along the length of the bluff body 60 in a non-parallel manner such that the average distance between the trailing edges varies along the length of the bluff body. Such an embodiment is schematically illustrated in Fig. 13, for example, wherein corrugated profiles 162, 164 move toward and away from each other on the average. As illustrated, the corrugated profiles 162, 164 may intersect each other to form a criss-cross pattern along the length of the fairing. The angle formed at the intersection point of the criss-cross pattern may be between about 10 degrees and about 60 degrees. Such an embodiment may include one or more of the variations described above.

In the embodiments described above, the fairings may be formed from materials different than the bluff bodies to which they are coupled. By way of example, the fairings may be formed from a polymeric material such as rubber, styrene or the like. The materials may be solid or have a cellular structure (e.g., such as foam). Other non-polymeric materials for forming the fairings may also be used, including wood for example. In an alternative embodiment, the fairings may have an inflatable construction. Additionally, the fairings may be formed through various molding processes, such as an injection molding process. Such a process may be conducive to relatively quick manufacturing and high volume output. Accordingly, the fairings may be manufactured at a relatively low cost.

It should be recognized that the fairings shown and described herein do not have to extend along the entire portion of the support structure 34, such as the support arms 38, tension elements 46 or tower 12. In this regard, in one embodiment only select portions of the support structure 34 which primarily impacts the downstream rotor may include the fairing. By way of example, in one embodiment the portion of the support structure 34 that is upstream of the outer 50%, and more preferably the outer 30%, of the rotor blades of a downstream rotor may include a fairing. Other discrete segments of the support structure 34 may be selectively chosen to include a fairing.

As noted above, the fairings shown and described herein are configured to mix out the wake region downstream of a bluff body. This may provide a number of advantages. By way of example, providing such fairings on upstream structures may provide downstream wind turbines/rotors with increased energy capture, decreased loads, and decreased capital costs as well as maintenance and repair costs. Moreover, for wind farm arrangements, such fairings may allow the spacing between adjacent wind turbines to be decreased. In addition to mixing out the wake region downstream of a bluff body, the fairings described above may have additional advantages. By way of example, bluff bodies in an airflow may exhibit vortex-induced vibrations, which may be a primary source of fatigue and other damage to the structural support. Vortex-induced vibrations may occur, for example, when the frequency of the vortex shedding over the bluff body approaches a natural frequency of vibration of the structural system. The addition of the fairings to the structural support may alter the fluid flow regime about the bluff body so as to decrease the likelihood of approaching the natural frequency of the system, thus staving off the negative impact of these vibrations.

While the present invention has been illustrated by the description of various embodiments thereof, and while the embodiments have been described in considerable detail, it is not intended to restrict or in any way limit the scope of the appended claims to such detail. For example, while the fairing is primarily described in connection with a three dimensional wind turbine, where rotors are in different planes and in close proximity to each other, it should be realized that embodiments of the invention may prove beneficial to a wide variety of wind turbine designs. In this regard, embodiments of the invention may prove beneficial in "downwind" wind turbine designs, where the rotor is positioned downwind of the structure that supports that rotor. Additionally, as noted above, embodiments of the invention may prove beneficial in wind farms (regardless of the type of wind turbine) having an upstream/downstream relationship between adjacent wind turbines. In this regard, it is believed that reducing the wake region of the airflow over the upstream wind turbine will allow the wind turbines to be spaced closer together. Accordingly, it should be recognized that the benefits afforded by embodiments of the invention apply to a wide range of wind turbine designs and should not be limited to any particular design, such as a three dimensional wind turbine as described and illustrated herein.

Thus, the various features discussed herein may be used alone or in any combination. Additional advantages and modifications will readily appear to those skilled in the art. The invention in its broader aspects is therefore not limited to the specific details and illustrative examples shown and described. Accordingly, departures may be made from such details without departing from the scope of the general inventive concept.

## Claims

1. A wind turbine (30) configured as a multi-rotor wind turbine, comprising:
a plurality of energy generating units (32), each energy generating unit including a rotor (48) having at least one wind turbine blade (52) wherein the rotor is configured to rotate under a primary airflow and a generator configured to convert the rotation of the rotor into electrical energy;
a support structure (34) for carrying the energy generating units (32), the support structure having an aerodynamic portion which is exposed to the primary airflow and/or a secondary airflow resulting from the rotation of the rotor (48) of at least one of the energy generating units, and the aerodynamic portion having an upstream side (78) and a downstream side (80);
the support structure (34) includes a tower (36) generally defining a tower axis (42) and a plurality of support arms (38), each support arm being coupled to the tower and carrying an energy generating unit at a spaced distance from the tower axis; and
a fairing (62) coupled to the support structure (34) and positioned along a downstream side (80) of the aerodynamic portion and defining a trailing edge (72), wherein the trailing edge has a corrugated profile (86).

2. The wind turbine according to claim 1, wherein the aerodynamic portion of the support structure (34) to which the fairing (62) is coupled includes at least a portion of the tower (36).

3. The wind turbine according to claim 1, wherein the aerodynamic portion of the support structure to which the fairing (62) is coupled includes at least a portion of a support arm (38).

4. The wind turbine according to claim 1, wherein the support structure (34) further includes a plurality of tension elements (46), each tension element being coupled to a support arm or the energy generating unit at a distance from the tower axis and extending toward the tower, wherein the aerodynamic portion of the support structure to which the fairing (62) is coupled includes at least a portion of a tension element.

5. The wind turbine according to claim 1, wherein the multi-rotor wind turbine includes at least one upstream energy generating unit and at least one downstream energy generating unit, wherein the fairing (62) is positioned between the at least one upstream energy generating unit and the at least one downstream energy generating unit.

6. The wind turbine according to any of the preceding claims, wherein the fairing includes a first fairing portion (112) positioned on a first side of the aerodynamic portion of the support structure (34), the first fairing portion having a leading edge (122) and a surface converging toward a central plane of the aerodynamic portion of the support structure which terminates at a first trailing edge adjacent the central plane, wherein the first trailing edge includes the corrugated profile.

7. The wind turbine according to claim 6, further comprising a second fairing portion (114) positioned on a second side of the aerodynamic portion of the support structure (34), the second fairing portion having a leading edge (134) and a surface converging toward a central plane of the aerodynamic portion of the support structure which terminates at the first trailing edge of the first fairing portion.

8. The wind turbine according to claim 7 further comprising a second fairing portion (114) positioned on a second side of the aerodynamic portion of the support structure (34), the second fairing portion having a leading edge (134) and a surface converging toward a central plane of the aerodynamic portion of the support structure which terminates at a second trailing edge adjacent the central plane and spaced from the first trailing edge of the first fairing portion.

9. The wind turbine according to claim 8, wherein the second trailing edge has a corrugated profile.

10. The wind turbine according to claim 8 or 9, wherein the first trailing edge and second trailing edge define a criss-cross pattern along the length of the fairing.

11. The wind turbine according to any of the preceding claims, wherein the corrugated profile (86) includes macro corrugations and/or micro corrugations.

12. The wind turbine according to any of the preceding claims, wherein the corrugated profile (86) varies along the length of the fairing.

13. The wind turbine according to claim 12, wherein the corrugated profile (86) varies in at least one of a wavelength, amplitude, or type along the length of the fairing.

14. The wind turbine according to any of the preceding claims, wherein the fairing (62) is fixedly coupled or rotatably coupled to the aerodynamic portion of the support structure (34).

15. The wind turbine according to any of the preceding claims, wherein the corrugated profile (86) is configured to minimize a wake region downstream of the support structure (34) generated by an airflow over the support structure.

## Patentansprüche

1. Windkraftanlage (30), die als eine Multirotor-Windkraftanlage konfiguriert ist, die umfasst:
eine Vielzahl von Energieerzeugungseinheiten (32), wobei jede Energieerzeugungseinheit einen Rotor (48) beinhaltet, der mindestens ein Windkraftanlagenblatt (52) aufweist, wobei der Rotor dazu konfiguriert ist, unter einem Primärluftstrom zu drehen, und einen Generator, der dazu konfiguriert ist, die Drehung des Rotors in elektrische Energie umzuwandeln;
eine Trägerstruktur (34) zum Tragen der Energieerzeugungseinheiten (32), wobei die Trägerstruktur einen aerodynamischen Abschnitt aufweist, der dem Primärluftstrom und/oder einem Sekundärluftstrom, der aus der Drehung des Rotors (48) mindestens einer der Energieerzeugungseinheiten resultiert, ausgesetzt ist, und der aerodynamische Abschnitt eine stromaufwärtige Seite (78) und eine stromabwärtige Seite (80) aufweist;
wobei die Trägerstruktur (34) einen Turm (36) beinhaltet, der im Allgemeinen eine Turmachse (42) definiert, und eine Vielzahl von Trägerarmen (38), wobei jeder Trägerarm mit dem Turm gekoppelt ist und eine Energieerzeugungseinheit in einer beabstandeten Entfernung von der Turmachse trägt; und
eine Verkleidung (62), die an die Trägerstruktur (34) gekoppelt und entlang einer stromabwärtigen Seite (80) des aerodynamischen Abschnitts positioniert ist und eine Hinterkante (72) definiert, wobei die Hinterkante ein welliges Profil (86) aufweist.

2. Windkraftanlage nach Anspruch 1, wobei der aerodynamische Abschnitt der Trägerstruktur (34) an die die Verkleidung (62) gekoppelt ist, mindestens einen Abschnitt des Turms (36) beinhaltet.

3. Windkraftanlage nach Anspruch 1, wobei der aerodynamische Abschnitt der Trägerstruktur, an die die Verkleidung (62) gekoppelt ist, mindestens einen Abschnitt eines Trägerarms (38) beinhaltet.

4. Windkraftanlage nach Anspruch 1, wobei die Trägerstruktur (34) weiter eine Vielzahl von Spannelementen (46) beinhaltet, wobei jedes Spannelement an einen Trägerarm oder an die Energieerzeugungseinheit in einem Abstand von der Turmachse gekoppelt ist und sich zu dem Turm erstreckt, wobei der aerodynamische Abschnitt der Trägerstruktur, an die die Verkleidung (62) gekoppelt ist, mindestens einen Abschnitt eines Spannelements beinhaltet.

5. Windkraftanlage nach Anspruch 1, wobei die Multirotor-Windkraftanlage mindestens eine stromaufwärtige Energieerzeugungseinheit und mindestens eine stromabwärtige Energieerzeugungseinheit beinhaltet, wobei die Verkleidung (62) zwischen mindestens einer stromaufwärtigen Energieerzeugungseinheit und der mindestens einen stromabwärtigen Energieerzeugungseinheit positioniert ist.

6. Windkraftanlage nach einem der vorstehenden Ansprüche, wobei die Verkleidung einen ersten Verkleidungsabschnitt (112) beinhaltet, der auf einer ersten Seite des aerodynamische Abschnitt der Trägerstruktur (34) positioniert ist, wobei der erste Verkleidungsabschnitt eine Vorderkante (122) und eine Oberfläche aufweist, die zu einer zentralen Ebene des aerodynamischen Abschnitts der Trägerstruktur konvergiert, die an einer ersten Hinterkante an die zentrale Ebene angrenzend endet, wobei die erste Hinterkante ein welliges Profil beinhaltet.

7. Windkraftanlage nach Anspruch 6, die weiter einen zweiten Verkleidungsabschnitt (114) umfasst, der auf einer zweiten Seite des aerodynamischen Abschnitts der Trägerstruktur (34) positioniert ist, wobei der zweite Verkleidungsabschnitt eine Vorderkante (134) und eine Oberfläche aufweist, die zu einer zentralen Ebene des aerodynamischen Abschnitts der Trägerstruktur, der an der ersten Hinterkante des ersten Verkleidungsabschnitts endet, konvergieren.

8. Windkraftanlage nach Anspruch 7, die weiter einen zweiten Verkleidungsabschnitt (114) umfasst, der auf einer zweiten Seite des aerodynamischen Abschnitts der Trägerstruktur (34) positioniert ist, wobei der zweite Verkleidungsabschnitt eine Vorderkante (134) und eine Oberfläche aufweist, die zu einer zentralen Ebene des aerodynamischen Abschnitts der Trägerstruktur, die an einer zweiten Hinterkante benachbart an die zentrale Ebene und von der ersten Hinterkante des ersten Verkleidungsabschnitts beabstandet endet, konvergieren.

9. Windkraftanlage nach Anspruch 8, wobei die zweite Hinterkante ein welliges Profil aufweist.

10. Windkraftanlage nach Anspruch 8 oder 9, wobei die erste Hinterkante und die zweite Hinterkante ein verkreuztes Muster entlang der Länge der Verkleidung definieren.

11. Windkraftanlage nach einem der vorstehenden Ansprüche, wobei das wellige Profil (86) Makrowellungen und/oder Mikrowellungen beinhaltet.

12. Windkraftanlage nach einem der vorstehenden Ansprüche, wobei das wellige Profil (86) entlang der Länge der Verkleidung variiert.

13. Windkraftanlage nach Anspruch 12, wobei das wellige Profil (86) in mindestens einer einer Wellenlänge, Amplitude oder eines Typs entlang der Länge der Verkleidung variiert.

14. Windkraftanlage nach einem der vorstehenden Ansprüche, wobei die Verkleidung (62) an den aerodynamischen Abschnitt der Trägerstruktur (34) fest gekoppelt ist oder drehbar gekoppelt ist.

15. Windkraftanlage nach einem der vorstehenden Ansprüche, wobei das wellige Profil (86) dazu konfiguriert ist, einen Nachlaufbereich stromabwärts der Trägerstruktur (34), der von einem Luftfluss über die Trägerstruktur erzeugt wird, zu minimieren.

## Revendications

1. Éolienne (30) configurée en tant qu'éolienne à rotors multiples, comprenant :
une pluralité d'unités de génération d'énergie (32), chaque unité de génération d'énergie incluant un rotor (48) présentant au moins une pale d'éolienne (52) dans laquelle le rotor est configuré pour tourner sous un flux d'air primaire et un générateur configuré pour convertir la rotation du rotor en énergie électrique ;
une structure de support (34) pour porter les unités de génération d'énergie (32), la structure de support présentant une partie aérodynamique qui est exposée au flux d'air primaire et/ou à un flux d'air secondaire résultant de la rotation du rotor (48) d'au moins une des unités de génération d'énergie, et la partie aérodynamique présentant un côté amont (78) et un côté aval (80) ;
la structure de support (34) inclut une tour (36) définissant globalement un axe de tour (42) et une pluralité de bras de support (38), chaque bras de support étant couplé à la tour et portant une unité de génération d'énergie à une distance espacée de l'axe de tour ; et
un carénage (62) couplé à la structure de support (34) et positionné le long d'un côté aval (80) de la partie aérodynamique et définissant un bord de fuite (72), dans laquelle le bord de fuite présente un profil ondulé (86).

2. Éolienne selon la revendication 1, dans laquelle la partie aérodynamique de la structure de support (34) à laquelle est couplé le carénage (62) inclut au moins une partie de la tour (36).

3. Éolienne selon la revendication 1, dans laquelle la partie aérodynamique de la structure de support à laquelle est couplé le carénage (62) inclut au moins une partie d'un bras de support (38).

4. Éolienne selon la revendication 1, dans laquelle la structure de support (34) inclut en outre une pluralité d'éléments de tension (46), chaque élément de tension étant couplé à un bras de support ou à l'unité de génération d'énergie à une distance de l'axe de tour et s'étendant vers la tour, dans laquelle la partie aérodynamique de la structure de support à laquelle est couplé le carénage (62) inclut au moins une partie d'un élément de tension.

5. Éolienne selon la revendication 1, dans laquelle l'éolienne à rotors multiples inclut au moins une unité de génération d'énergie amont et au moins une unité de génération d'énergie aval, dans laquelle le carénage (62) est positionné entre l'au moins une unité de génération d'énergie amont et l'au moins une unité de génération d'énergie aval.

6. Éolienne selon l'une quelconque des revendications précédentes, dans laquelle le carénage inclut une première partie de carénage (112) positionnée sur un premier côté de la partie aérodynamique de la structure de support (34), la première partie de carénage présentant un bord d'attaque (122) et une surface convergeant vers un plan central de la partie aérodynamique de la structure de support qui se termine au niveau d'un premier bord de fuite adjacent au plan central, dans laquelle le premier bord de fuite inclut le profil ondulé.

7. Éolienne selon la revendication 6, comprenant en outre une seconde partie de carénage (114) positionnée sur un second côté de la partie aérodynamique de la structure de support (34), la seconde partie de carénage présentant un bord d'attaque (134) et une surface convergeant vers un plan central de la partie aérodynamique de la structure de support qui se termine au niveau du premier bord de fuite de la première partie de carénage.

8. Éolienne selon la revendication 7, comprenant en outre une seconde partie de carénage (114) positionnée sur un second côté de la partie aérodynamique de la structure de support (34), la seconde partie de carénage présentant un bord d'attaque (134) et une surface convergeant vers un plan central de la partie aérodynamique de la structure de support qui se termine au niveau d'un second bord de fuite adjacent au plan central et espacé du premier bord de fuite de la première partie de carénage.

9. Éolienne selon la revendication 8, dans laquelle le second bord de fuite présente un profil ondulé.

10. Éolienne selon la revendication 8 ou 9, dans laquelle les premier bord de fuite et second bord de fuite définissent un motif entrecroisé le long de la longueur du carénage.

11. Éolienne selon l'une quelconque des revendications précédentes, dans laquelle le profil ondulé (86) inclut des macro-ondulations et/ou micro-ondulations.

12. Éolienne selon l'une quelconque des revendications précédentes, dans laquelle le profil ondulé (86) varie le long de la longueur du carénage.

13. Éolienne selon la revendication 12, dans laquelle le profil ondulé (86) varie dans au moins un parmi une longueur d'onde, une amplitude ou un type le long de la longueur du carénage.

14. Éolienne selon l'une quelconque des revendications précédentes, dans laquelle le carénage (62) est couplé de manière fixe ou couplé de manière rotative à la partie aérodynamique de la structure de support (34).

15. Éolienne selon l'une quelconque des revendications précédentes, dans laquelle le profil ondulé (86) est configuré pour minimiser une région de sillage en aval de la structure de support (34) générée par un flux d'air par-dessus de la structure de support.
